# EUROPEAN PATENT APPLICATION

(11) **EP 1 997 758 A2**
(43) Date of publication of application: **03.12.2008**
(21) Application number: 08009103.6
(22) Date of filing: 16.05.2008
(51) Int. Cl.: B65H 23/06

(54) **Tension control system for a web of material**

(30) Priority: 30.05.2007 US 807883
(71) Applicant: Fife Corporation, Oklahoma City, Oklahoma 73126 (US)
(72) Inventor: Jost, Michael A., Edmond OK 73003 (US); Schmidt, Chad, Yukon OK 73099 (US); Dwivedula, Ram V., Oklahoma City OK 73120 (US); Hemphill, Michael S., Oklahoma City OK 73132 (US); Heitman, Tim Allen, Oklahoma City OK 73142 (US); Haque, Md M., Edmond OK 73003 (US)
(74) Representative: Ebner von Eschenbach, Jennifer

(57) **Abstract**

A tension control assembly including a rotating member (14), a braking member (28), at least one brake pad (30a,30b,30c,30d), a means for driving the at least one brake pad (30a,30b,30c,30d) against the braking member (28), and a temperature sensing means. The braking member (28) is attached to the rotating member. The at least one brake pad (30a,30b,30c,30d) is positioned adjacent to the braking member (28). The means for driving the at least one brake pad (30a,30b,30c,30d) against the braking member (28) forces frictional contact between the at least one brake pad (30a,30b,30c,30d) and the braking member (28), thus providing torque to the rotating member (14). The temperature sensing means measures the temperature of the at least one brake pad.

## Description

### Cross-reference to related applications

Not applicable.

### Statement regarding Federally Sponsored

### Research and Development

Not applicable.

### SUMMARY

The technology here described provides braking systems for providing torque to rotating members. An exemplary system according to the invention comprises a rotating member; a braking member attached to the rotating member; at least one brake pad positioned adjacent to the braking member; means for driving the at least one brake pad against the braking member; and temperature sensing means for measuring the temperature of the at least one brake pad. In an exemplary embodiment the braking member is selected from the group consisting of a rotor and a brake drum. In another exemplary embodiment the temperature sensing means is selected from the group consisting of a thermocouple and a thermistor.

An additional exemplary braking system comprises a rotating member; a braking member attached to the rotating member; at least one brake pad for frictionally contacting the rotor; and a pad wear detection assembly positioned in a predetermined manner with respect to the at least one brake pad for determining when to replace the at least one brake pad. In an exemplary embodiment the pad wear detection assembly comprises a loop circuit providing a signal verifying that the loop is closed and a proper pad wear level is maintained, the loop circuit providing a signal when the loop is opened signifying that the pad wear level is such that the at least one brake pad needs to be replaced.

Another exemplary braking system permits brake pad replacement. The braking system comprises a rotating member; a rotor attached to the rotating member; at least one brake pad capable of frictionally contacting the rotor; a housing substantially covering the rotor and the at least one brake pad of the braking system, the housing provided with at least one opening disposed near the at least one brake pad so as to allow the at least one brake pad to be withdrawn through the at least one opening of the housing; and at least one protective member covering the at least one opening of the housing, the at least one protective member engaging the at least one brake pad to secure the at least one brake pad within the housing.

Another exemplary braking system comprises a rotating member; a braking member attached to the rotating member; at least one brake pad positioned adjacent to the braking member; means for driving the at least one brake pad against the braking member; means for measuring the temperature of the at least one brake pad; a fluid propulsion assembly for directing fluid across the braking member; and a controller activating the fluid propulsion assembly when the temperature of the at least one brake pad exceeds a first predetermined temperature and deactivating the fluid propulsion assembly when the temperature of the at least one brake pad falls below a second predetermined temperature.

Further described is a rotor cooling system for a braking system. The rotor cooling system comprises a rotating member; a rotor attached to the rotating member, the rotor having a fluid input port and a fluid output port; and a first flow tube spatially disposed relative to the rotor for directing fluid into the fluid input port of the rotor so as to allow fluid to be propelled across the rotor and expelled from the rotor out the fluid output port, the first flow tube positioned to isolate the fluid expelled from the fluid output port of the rotor from fluid entering the fluid input port of the rotor. In an exemplary embodiment the cooling system further comprises a fluid propulsion system positioned adjacent to the first flow tube on the side opposite the braking member to increase the amount of fluid propelled into the first flow tube. In another exemplary embodiment the cooling system further comprises a second flow tube positioned adjacent to the fluid propulsion assembly on the side opposite the first flow tube to increase the amount of fluid that can be drawn into the fluid propulsion assembly. In another exemplary embodiment the fluid propulsion assembly is selected from the group consisting of a fan and a pump.

Another embodiment is a method of replacing a brake pad of a braking system, the braking system having a rotating member, a rotor attached to the rotating member, and at least one brake pad frictionally contacting the rotor. The method comprises the steps of opening at least one protective member covering at least one opening in a housing to release the at least one brake pad, the housing substantially covering the rotor and the at least one brake pad of the braking system, the at least one opening disposed near the at least one brake pad so as to allow the at least one brake pad to be withdrawn through the at least one opening of the housing; removing the at least one brake pad from the housing through the at least one opening of the housing; inserting a replacement brake pad into the housing through the at least one opening of the housing; and closing the at least one protective member to cover the at least one opening of the housing and to maintain the replacement brake pad in a mounted position.

A further embodiment is a rotor. The rotor comprises a back plate mountable to a rotating member, the back plate having an outer edge, a first side and a second side opposite of the first side, the second side providing a first frictional surface for braking; a front ring member having an outer edge, an inner edge, a first side, and a second side opposite of the first side, the first side of the front ring member having a second frictional surface for braking; and a plurality of fins extending between the first side of the back plate and the second side of the front ring member, each of the fins having an outer end, an inner end and a length extending therebetween, front ring member, the fins, and the back plate forming a plurality of flutes, each of the flutes having a fluid input port and a fluid output port, each fin having the inner end positioned adjacent to the fluid input port and tapering along a portion of the length of the fin. In an exemplary embodiment the rotor further comprises an inner member extending substantially parallel with the front ring member and positioned between the back plate and the front ring member, the inner member having an inner end terminating at an intersection with the inner end of the fins. In another exemplary embodiment the outer end of the fins and the outer edge of the front ring member terminate at substantially the same position as the back plate.

The invention includes other embodiments within the scope of the claims, and variations of all embodiments. Additional understanding of the invention can be obtained by referencing the detailed description of exemplary embodiments of the invention below. The description of elements and their interactions are all preferable, modifications being possible and expected.

### BRIEF DESCRIPTION OF THE DRAWINGS

FIG. 1 is a perspective view of an exemplary tension control system constructed in accordance with the present invention for controlling the tension of a web of material supported by a roller system.

FIG. 2 is a cross-sectional view of the tension control system.

FIG. 3 is a perspective view of an exemplary braking member of the tension control system.

FIG. 4 is a cross-sectional view of the braking member taken along line 4-4 of FIG. 3 with the hub assembly removed.

FIG. 5 is a perspective view of an exemplary brake pad assembly constructed in accordance with the present invention of the tension control system.

FIG. 6 is an exploded, cross-sectional view of the brake pad assembly in accordance with the present invention.

FIG. 7 is a cross-sectional view of an exemplary cooling system in accordance with the present invention.

FIG. 8 is an enlarged, perspective view of a portion of the tension control system.

FIG. 9 is a perspective view of an exemplary protective member of the tension control system.

FIG. 10 is a cross-sectional view of an exemplary brake pad drive assembly constructed in accordance with the present invention for facilitating the easier replacement of the brake pad.

FIG. 11 is a front elevational view of a caliper of the tension control system.

FIG. 12 is another cross-sectional view of the brake pad drive assembly.

FIG. 13 is a block diagram of a control system constructed in accordance with the present invention.

### DETAILED DESCRIPTION OF EXEMPLARY EMBODIMENTS

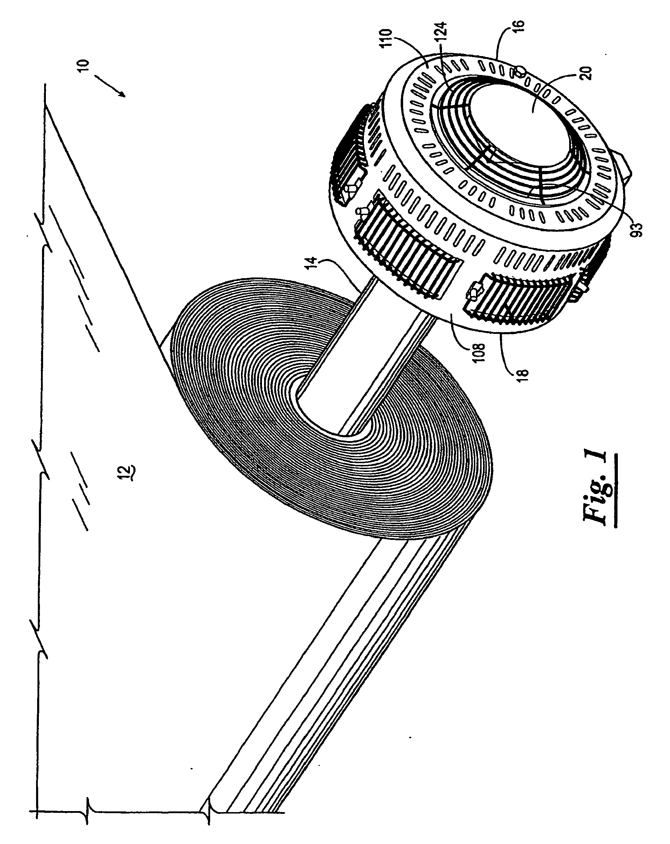

Referring to the drawings in detail, and particularly to FIG. 1, reference character 10 generally designates a roller system used to wind and unwind a web of material 12, such as polymer film and paper products. The roller system 10 includes a rotating member 14, such as an unwind roller, from which the web of material 12 is unwound, and a tension control system 16 attachable to the rotating member 14 to provide the requisite amount of tension to the web of material 12 via the rotating member 14. Only one tension control system 16 is shown in FIG. 1; however, it should be appreciated that a pair of tension control systems 16 could be implemented with the rotating member 14.

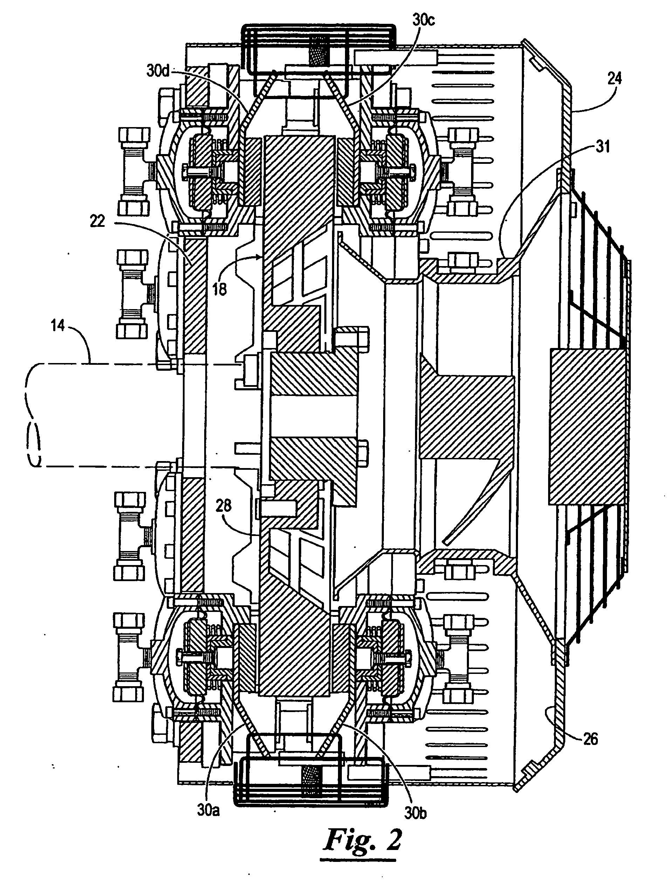

Referring now to FIG. 2, the tension control system 16 includes a braking system 18 for providing torque to the rotating member 14 and a controller 20 for monitoring the braking system 18. In an exemplary embodiment, the tension control system 16 can be implemented as a continuous braking system, thus providing constant torque to the rotating member 14 via the braking system 18.

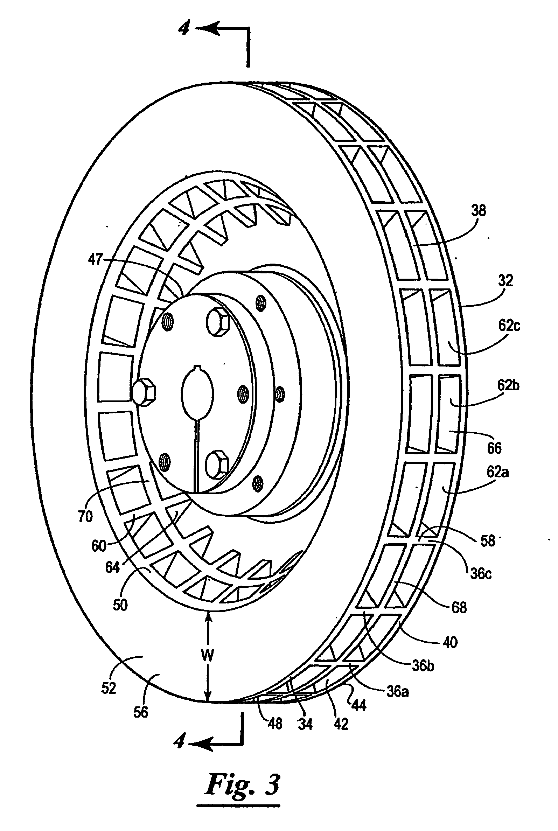

Generally, as shown in FIGS. 2 and 3, the braking system 18 has a mounting plate 22, a housing 24 connected to and cooperating with the mounting plate 22 to form a housing chamber 26, a braking member 28 attached to the rotating member 14 and positioned in the housing chamber 26, a plurality of brake pad assemblies 30 positioned adjacent to the braking rotor 28, a brake pad drive assembly 29 for driving the brake pad assemblies 30 against the braking rotor 28, and a cooling system 31 positioned in the housing chamber 26 for controlling the temperature of the braking member 28 and the brake pad assemblies 30. For purposes of clarity, only four of the brake pad assemblies 30 have been labeled in FIG. 2 by reference numerals 30a, 30b, 30c, and 30d.

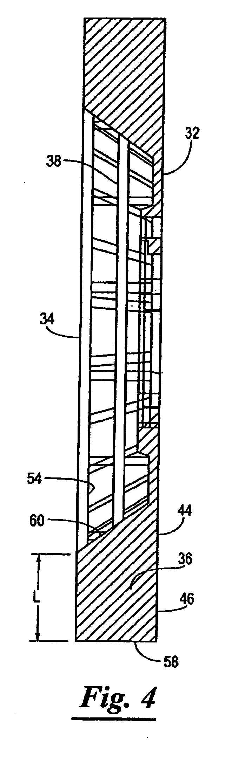

The braking member 28 can be any device capable of being slowed via frictional contact, such as a rotor, disc, or drum. By way of example, the braking member 28 is described herein as a rotor. In an exemplary embodiment, shown in FIGS. 3 and 4, the braking member 28 includes a back plate 32 mountable to the rotating member 14, a front ring member 34, and a plurality of fins 36 extending between the back plate 32 and the front ring member 34. For purposes of clarity, only three of the fins 36 have been labeled in FIGS. 3 and 4 by reference numerals 36a, 36b, and 36c. The braking member 28 is further provided with an inner member 38 positioned between the back plate 32 and the front ring member 34.

As shown in FIG. 3, the back plate 32 has an outer edge 40, a first side 42, and a second side 44 opposite of the first side 42. The second side 44 having a frictional surface 46 for engaging the brake pad assemblies 30. It should be appreciated that the back plate 32 can be sized to fit any braking system and the frictional surface 46 can be a wearing surface or substantially non-wearing surface. The back plate 32 is connected to the rotating member 14 via any suitable means known in the art, such as a hub assembly 47.

The front ring member 34 of the braking member 28 has an outer edge 48, an inner edge 50, a first side 52, and a second side 54 opposite of the first side 50. The first side 52 and the second side 54 having a width W extending there between. The first side 52 has a frictional surface 56 for engaging the brake pad assemblies 30. It should be appreciated, however, that the width W can be configured to fit any braking system and the frictional surface 56 can be a wearing or substantially non-wearing surface. For example, the width W can be lengthened or shortened to accommodate larger or smaller brake pad assemblies 30.

The fins 36 of the braking member 28 extend between the first side 42 of the back plate 32 and the second side 54 of the front ring member 34. Each of the fins 36 include an outer end 58, an inner end 60, and a length L extending between the outer end 58 and the inner end 60. The front ring member 34, the fins 36, and the back plate 32 cooperate to form a plurality of flutes 62, only three of the flutes 62 have been labeled in FIG. 3 by reference numerals 62a, 62b, and 62c. Each flute 62 has a fluid input port 64 and a fluid output port 66 whereby a fluid, such as air, can be passed through the flute 62 and across the internal surface area of the back plate 32, the fins 36, and the front ring member 34. This increases the heat transfer coefficient of the fluid passing through the flutes 62, thus allowing the braking member 28 to more efficiently dissipate heat. The inner end 60 of each fin 36 is positioned adjacent to the fluid input port 64 of the flutes 62 and tapers along the length L of the fin 36. The tapering of the inner ends 60 of the fins 36 permits the fluid to more easily enter the fluid input port 64 of the flutes 62, and thus removing heat from the braking member 28. The tapering of the inner ends 60 of the fins 36 also facilitates the making of the braking member 28 by way of a casting process.

As shown in FIGS. 3 and 4, the inner member 38, positioned between the back plate 32 and the front ring member 34, extends substantially parallel to the back plate 32 and the front ring member 34. The inner member 38 has an outer end 68 and an inner end 70 opposite the outer end 68. The inner end 70 of the inner member 38 terminates at an intersection with the inner ends 60 of the fins 36. The inclusion of the inner member 38 increases the number of flutes 62 of the braking member 28. The inner member 38 can be included to provide structural support to the braking member 28 and to provide additional surface area for releasing heat from the braking member 28.

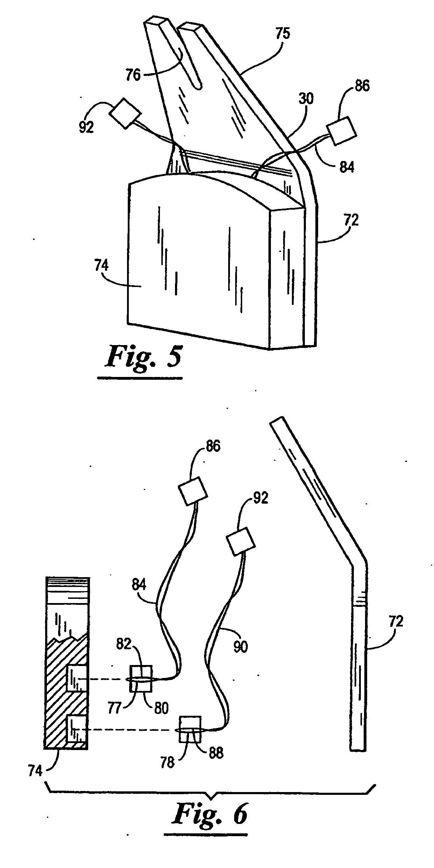

As shown in FIGS. 5 and 6, each of the brake pad assemblies 30 includes a backing plate 72 and a pad 74 attached to the backing plate 72. The pad 74 can be attached to the backing plate 72 in any suitable manner known in the art, such as gluing, bonding, welding, and soldering. The backing plate 72 has an ear portion 75 angled inwardly toward the pad 74 to facilitate removal of the brake pad assemblies 30 from the braking system 18. The ear portion 75 has a vertical slot 76 for assisting in maintaining the brake pad assembly 30 in a mounted position in a manner to be described below. The pads 74 of the brake pad assemblies 30 can be constructed of non-asbestos organic material, semi-metallic material, ceramic material, or combinations thereof.

In an exemplary embodiment, the brake pad assemblies 30 further include a temperature sensor assembly 77 for measuring the temperature of the pads 74 and a pad wear detection assembly 78 positioned in a manner so as to determine when to replace the brake pad assembly 30. The temperature sensor assembly 77 can be any means suitable to determine the temperature of the pads 74 known in the art and capable of withstanding the temperature conditions of the pad 74, such as a thermocouple or a thermistor.

In an exemplary embodiment, the temperature sensor assembly 77 includes an insulator 80, a thermocouple 82 positioned within the insulator 80, and a thermocouple wire 84 connected to the thermocouple 82 and leading outside of the brake pad assembly 30 to a quick disconnect connector 86. The thermocouple 82. and insulator 80 are embedded within the pad 74 so as to determine the temperature of the pad 74. The thermocouple 82 and insulator 80 can be placed anywhere within the pad 74 so as to be able to determine the temperature of the pad 74. The thermocouple 82 can be provided as a closed loop circuit. The quick disconnect connector 86 allows for the temperature sensor assembly 77 to be easily connected and disconnected to the controller 20. It should be appreciated, however, that the thermocouple wire 84 can be extended to the thermocouple 82 in any manner so as to not interfere with the contact between the brake pad assembly 30 and the braking member 28 or interfere with the drive assembly 29 driving the brake pad assembly 30 via the backing plate 72 into the braking member 28. In an exemplary embodiment, the thermocouple wire 84 is run to the thermocouple 82 between the pad 74 and the backing plate 72. The thermocouple wire 84 can be any suitable material known in the art capable of carrying a temperature measurement to the controller 20, such as k-type wire, j-type wire, and fiber optic material.

The pad wear detection assembly 78 electronically determines when the pad 74 has been worn to a predetermined level indicating that it is time to replace the brake pad assembly 30. The pad wear detection assembly 78 includes a closed loop circuit 88 and wiring 90 connecting the closed loop circuit 88 to a quick disconnect connector 92, and ultimately to the controller 20. The closed loop circuit 88 is embedded in the pad 74 at a predetermined position. The predetermined position corresponds to a worn pad level where the brake pad assembly 30 needs to be replaced. When the pad 74 is worn to the predetermined position, the closed loop circuit 88 is destroyed, or opened, which sends a signal to the controller 20 via the wiring 90 that the brake pad assembly 30 needs to be replaced. The controller 20 then sends a signal perceivable by an operator to indicate that the brake pad needs to be replaced. For example, the signal emitted by the controller 20 can be a light signal or an audible signal. The wiring 90 can be any suitable material known in the art capable of carrying the signal to the controller 20, such as copper wire, k-type wire, or fiber optic material.

In an alternative embodiment, the temperature sensor assembly 77 provides the function of the pad wear detection assembly 78 in addition to the function of the temperature sensor assembly 77. The thermocouple 82 of the temperature sensor assembly 77 is embedded in the pad 74 at a predetermined position. When the pad 74 is worn to the predetermined position, the closed loop circuit of the thermocouple 82 is opened. The opened circuit of the thermocouple 82 stops transmitting the temperature to the controller 20 which signals the controller 20 that the brake pad assembly 30 needs to be replaced.

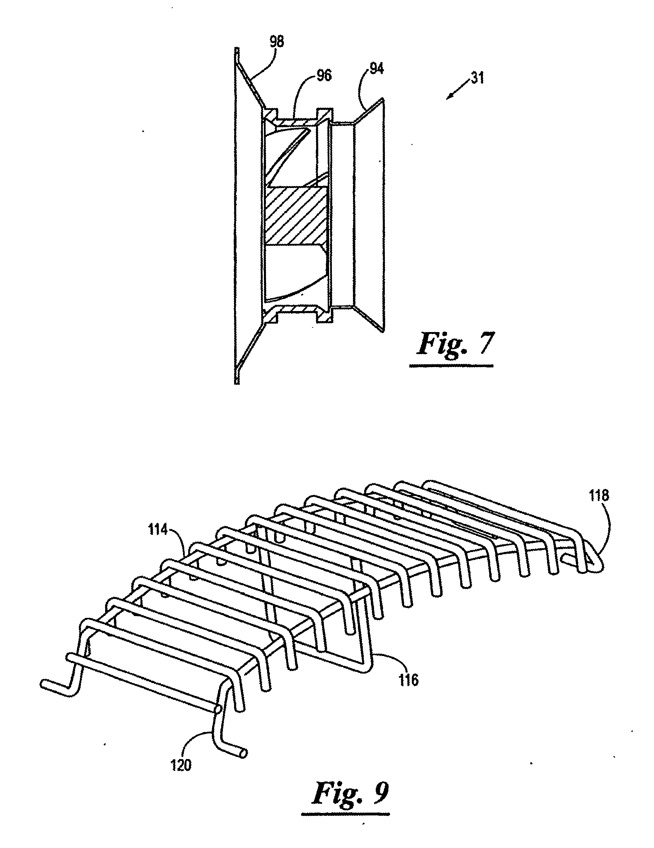

Referring now to FIGS. 2 and 7, the cooling system 31 is mounted in the housing 24 in alignment with an opening 93 of the housing 24 and the braking member 28. The cooling system 31 includes a first flow tube 94 spatially disposed relative to the braking member 28, a fluid propulsion assembly 96 for forcing fluid into the first flow tube 94, and a second flow tube 98 for directing fluid from outside the housing 24 into the fluid propulsion assembly 96. The first flow tube 94 directs fluid into the flutes 62 of the braking member 28 via the fluid inlet ports 64 to lower the temperature of the braking member 28, and thus the braking pads 30. The first flow tube 94 is configured and positioned to isolate the fluid expelled from the fluid output ports 66 of the braking member 28 from the fluid entering the fluid input ports 66 of the braking member 28. In one embodiment, the first flow tube 94 is conical in shape to better direct the fluid into the flutes 62 of the braking member 28.

The fluid propulsion assembly 96 is preferably positioned between the first flow tube 94 and the second flow tube 98. The fluid propulsion assembly 96 propels fluid from the second flow tube 98 into the first flow tube 94, and thus across the braking member 28. The controller 20 activates the fluid propulsion assembly 96 when the temperature of the brake pad assemblies 30 exceeds a first predetermined temperature. The controller 20 deactivates the fluid propulsion assembly 96 when the temperature of the brake pad assemblies 30 falls below a second predetermined temperature. The first and second predetermined temperatures can be the temperature for a single brake pad assembly 30 in the braking system 18 or the average temperature of a plurality of the brake pad assemblies 30. The fluid propulsion assembly 96 can be any suitable device known in the art for propelling fluid, such as a fan or a pump, and the fluid can be any suitable fluid known in the art, such as air, water, nitrogen, and combinations thereof.

The second flow tube 98 extends from the fluid propulsion assembly 96 on the side opposite the first flow tube 94 to the housing 24 (FIG. 2). The second flow tube 98 is tapered such that the second flow tube 98 funnels toward the fluid propulsion assembly 96 to increase the amount of fluid that can be drawn into the fluid propulsion assembly 96.

Another feature of the tension control system 16 is that the housing 24 of the braking system 18 is designed to facilitate replacement of the brake pad assemblies 30, to allow fluid to be passed across the braking member 28, and to safely encompass the braking system 18. As shown in FIGS. 1, 2, and 8, the housing 24 substantially covers the braking member 28 and the brake pad assemblies 30 of the braking system 18. The housing 24 is provided with an outside portion 108 and a front portion 110. The outside portion 108 has a plurality of openings 112. For purposes of clarity, only three of the openings 112 have been labeled in FIG. 2 by reference numerals 112a, 112b, and 112c. The openings 112 are disposed near the brake pad assemblies 30 for inserting and withdrawing the brake pad assemblies 30 through the openings 112. The openings 112 also allow the fluid exiting the fluid output ports 66 of the braking member 28 via the cooling system 31 to escape the housing 24.

Each opening 112 of the housing 24 is provided with a protective member 114 to cover the openings 112 of the housing 24. For purposes of clarity, only three of the protective members 114 have been labeled in FIG. 2 by reference numerals 114a, 114b, and 114c.

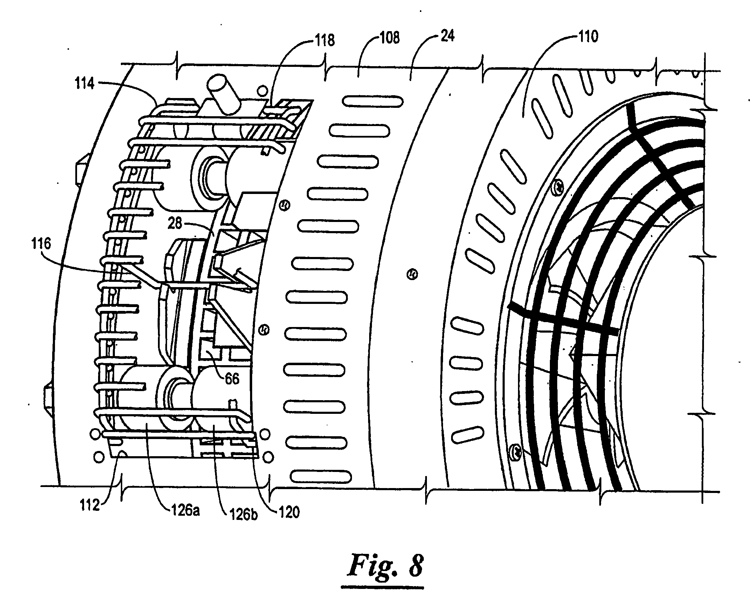

The braking system 18 is constructed so that movement of the protective member 114 releases the brake pad assembly 30 to facilitate replacement of the brake pad assembly 30. As shown in FIGS. 8 and 9, the protective member 114 can be a cage-like member (although other configurations could be used) with an engaging member 116 for directly or indirectly engaging the brake pad assemblies 30. In one embodiment, the protective member 114 has a first end 118 releasably engagable with the housing 24 and a second end 120 supportable by the housing 24.

The protective member 114 is constructed to prevent operators from inserting body parts such as fingers into the housing 24 when the braking system 18 is operational and to allow the fluid to escape from the braking member 28 through the opening 112 of the housing 24. The engaging member 116 of the protective member 114 is received in the vertical slots 76 of the brake pad assemblies 30 to secure the brake pad assemblies 30 within the housing 24.

The first end 118 of the protective member 114 can be releasably connected to the housing 24 in any suitable manner known in the art, such as with a screw, bolt, clasp, quick-turn release knob, and the like. The second end 120 of the protective member 114 can be pivotably connected to the housing 24 so as to allow the protective member 114 to be opened by releasing the first end 118 from the housing 24 and pivoting the protective member 114 about the second end 120.

As shown in FIG. 1, the front portion 110 of the housing 24 includes the opening 93 to allow a fluid to be drawn into the second flow tube 98 of the cooling system 31. In an exemplary embodiment, the controller 20 can be supported by the front portion 110 of the housing 24. The opening 93 is provided with a protective guard 124 to prevent the operator from inadvertently getting any body parts into the tension control system 16 while it is operational, but still allowing the fluid to be drawn through the protected opening 122 into the second flow tube 98.

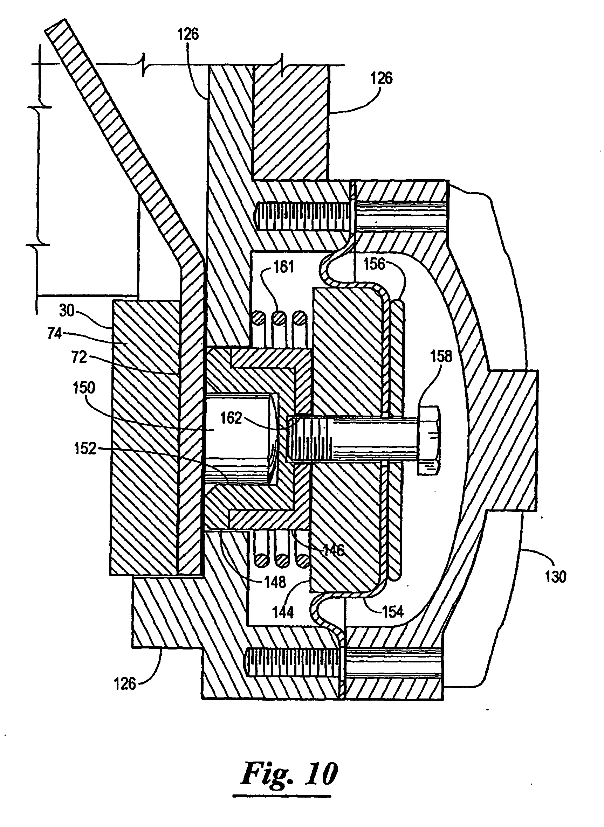

The torque of the tension control system 16 is created by the brake pad drive assembly 29 forcing the brake pad assemblies 30 into engagement with the braking member 28. More specifically, the brake pad drive assembly 29 forces the wear surface of the pad 74 into the frictional surfaces 46 and 56 of the braking member 28. In an exemplary embodiment, best shown in FIGS. 10-12, the brake pad drive assembly 29 includes calipers 126 disposed adjacent to the braking member 28 supporting the brake pad assemblies 30, a driving assembly 128 for driving the brake pad assemblies 30 into the braking member 28, and a caliper cap 130 attachable to each caliper 126.

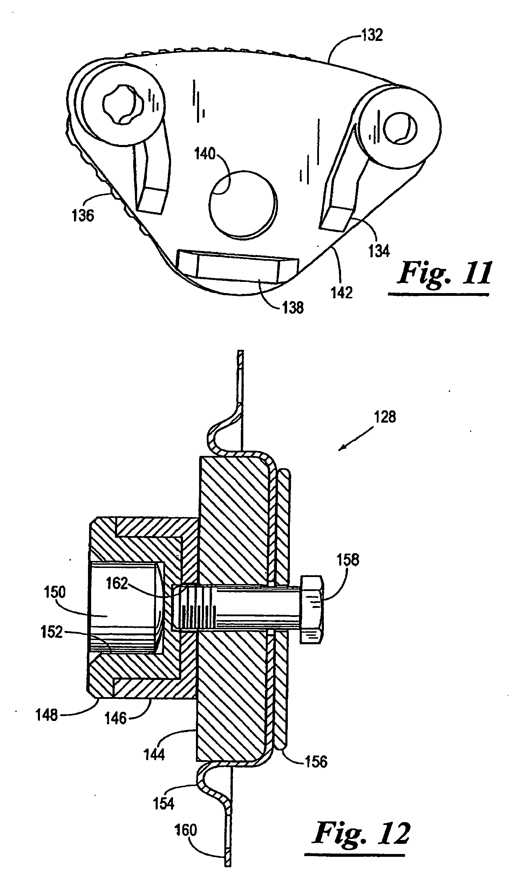

As shown in FIG. 11, each caliper 126 Includes a back portion 132, a first side retainer member 134 attached to the back portion 132, a second side retainer member 136 attached to the back portion 132, a lower retainer member 138 attached to the back portion 132, and an opening 140 in the back portion 132 of the caliper 126 disposed relative to the retainer members 134, 136, and 138. The retainer members 134, 136, and 138 cooperate to form a retainer area 142 for each brake pad assembly 30 whereby the brake pad assembly 30 is prevented from moving in the directions of the retainer members 134, 136, and 138. The opening 140 in the back portion 132 is positioned such that the opening 140 is substantially covered by the backing plate 72 of the brake pad assembly 30.

As shown in FIGS. 10 and 12, each driving assembly 128 includes a piston 144, a sleeve 146 positioned adjacent to the piston 144 and within the opening 140 of the caliper 126, a push rod 148 positioned substantially within the sleeve 146, a piston insert 150 positioned within a cavity 152 formed in the push rod 148, a rolling diaphragm 154 positioned adjacent to the piston 144 on the side opposite the push rod 148, a retainer plate 156 positioned adjacent to the rolling diaphragm 154 on the side opposite the piston 144, and a securing member 158 for connecting the driving assembly 128. Each driving assembly 128 is secured substantially in an area between the caliper 126 and the caliper cap 130. Each driving assembly 128 is secured within this area by securing an outer portion 160 of the rolling diaphragm 154 between the caliper cap 130 and the caliper 126. The driving force of the driving assembly 128 is provided through the caliper cap 130 and can be supplied to the driving assembly 128 by any suitable manner known in the art, such as with hydraulics or pneumatics. The lateral movement of the driving assembly 128 is permitted by the flexibility of the seal, between the caliper 126 and the caliper cap 130, provided by the construction and material of the rolling diaphragm 154. The rolling diaphragm 154 can be constructed in any suitable manner known in the art and made of any suitable material known in the art, such as an elastomeric material and polymeric material.

In another exemplary embodiment as shown in FIG. 10, the driving assembly 128 further includes a retracting device 161, such as a spring, positioned around the outside of the sleeve 146 and between the piston 144 and the caliper 126. By way of example, the retracting device 161 is described herein as a spring. The retracting device 161 forces the driving assembly 128, and thus the brake pad assembly 30, in a direction away from the braking member 28 when the driving force supplied through the caliper cap 130 is suspended. Without the driving force forcing the brake pad assemblies into the braking member 28, the brake pad assemblies 30 are more easily removed from the housing 24. Also, the retracting device 161 keeps the piston 144, and thus the push rod 148 and the piston insert 150, from contacting the braking member 28 or being unstable when the brake pad assemblies 30 are removed from the housing 24 and the driving force is suspended. The retracting device 161 also stabilizes the driving assembly 128 while the braking system 18 is in use. Another function of the retracting device 161 is consistently positioning the driving assembly in a rearward position when the driving force is suspended. Thus, the spring shown in Fig. 10 acts as a retracting device built into the actuation mechanism, thus avoiding the need for an external means of retraction known in the art. The spring shown in Fig. 10 retracts the piston to a position away from the rotor face when pressure is not applied. Thus, the spring eliminates the tendency of the piston to bounce around when there is no pressure and the rotor is rotating. The spring also acts as a positioning device for the push-rod so that when there is no pressure, it always retracts to the same position.

The sleeve 146 and the push rod 148 have a substantially u-shaped cross-section although other configurations could be used. The push rod 148 preferably engages the securing member 158. For example, the push rod 148 can have a threaded bore 162 for threadably engaging the securing member 158. The push rod 148 is configured to be substantially positioned within the sleeve 146. The retainer plate 156, the rolling diaphragm 154, the piston 144, and the sleeve 146 all include through holes. The securing member 158 is positioned through the through holes to threadably engage the threaded cavity 162 of the push rod 148 thereby securing the parts of the driving assembly 128.

In an exemplary embodiment, the piston insert 150 can be made of (or include) a magnetic material so as to be able to grip the backing plate 72 of the brake pad assembly 30. The piston insert 150 having the magnetic properties can maintain the brake pad assemblies 30 in a semi-mounted position until the engaging member 116 of the protective member 114 engages the vertical slots 76 in the ear portion 75 of the brake pad assemblies 30. The piston insert 150 can be any suitable magnetic material known in the art, such as ceramic, iron, steel, and the like. The piston insert 150 can be held in the cavity 152 of the push rod 148 in any suitable manner known in the art, such as bonding, gluing, epoxy, and the like.

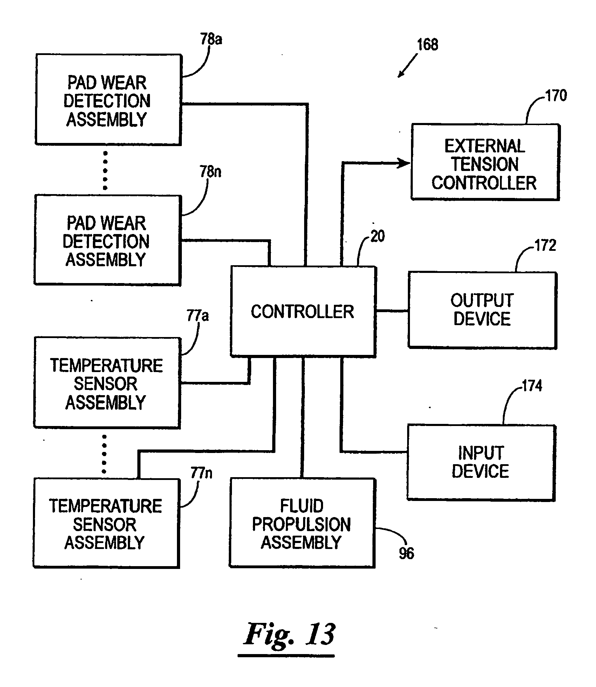

Referring now to Figure 13, a control system 168 implementing an exemplary controller 20 is shown. The control system 168 includes the controller 20 and the elements controlled by the controller described below. The controller 20 functions to maintain the temperature of components of the braking system 18 within a predefined range. The temperature of the brake pad assemblies 30 can be monitored as discussed above, however, it should be understood that the braking system 18 can be adapted to monitor other components within the braking system 18 which may be indicative of the temperature of the pad 74 or the braking member 28.

In the embodiment shown, the controller 20 receives input from the pad wear detection assemblies 78a-n, and the temperature sensor assemblies 77a-n. The controller 20 activates the fluid propulsion assembly 96 when the temperature of the brake pad assemblies 30 exceeds a first predetermined temperature. The controller 20 deactivates the fluid propulsion assembly 96 when the temperature of the brake pad assemblies 30 falls below a second predetermined temperature. The first and second predetermined temperatures can be the temperature for a single brake pad assembly 30 (or braking member 28) in the braking system 18 or the average temperature of a plurality of the brake pad assemblies 30 (or braking member 28). The difference between the first and second predetermined temperatures can be varied.

In addition, the controller monitors the temperature of the brake pad assemblies 30 and transmits the temperatures to an external tension controller 170, computer or the like for monitoring and providing more advanced robust tension control. The external computer/controller or PLC device having a PID algorithm for monitoring the tension in a web 12 and controlling the actuation force applied to the driving assembly 128 to control the tension in a web 12 at a predetermined setpoint can be programmed to modify the gain of the tension control system 16 to compensate for the change in gain of the braking system 18 due to changes in friction coefficient which are dependent on pad temperature. The tension afforded by the action of braking member 28 and pad assembly 30 typically depends on the temperature of the pad assembly 30 and the radius of the unwind of the tension control system 16 shown in FIG. 1. A typical tension control algorithm in an alternative embodiment ignores the effect of temperature of pad assembly 30 because temperature information is not available. The exemplary controller 20 shown in FIG. 13 having the temperature of the pad assembly 30 (shown in FIG. 2) information can be advantageously used to improve performance of the tension control algorithm. Any one of the standard techniques known in the art such as lookup tables and feed forward based compensation can be employed to improve the tension control system's 16 performance. In addition if the braking system controller 20 (FIG. 13) or the external tension controller 170 is given the web speed and initial unwind roll diameter, this information may be used to compute the instantaneous roll radius and thus the braking torque more precisely.

The controller 20 also receives input from the pad wear detection assemblies 78a-78n and outputs a signal to an output device 172 to notify an operator that a brake pad assembly 30 needs replacing. The output device can be adapted to output a signal in any manner perceivable by an operator. For example, the output device 172 can be a hom, display or light display (such as one or more LEDs). The controller 20 can also receive input from an input device 174, such as a keyboard, keypad, computer or the like to permit an operator to set or modify the predefined temperature range, clear the signal indicative of the pad 74 needing replacement or the like.

The controller 20 can be constructed of a logic device capable of executing instructions to provide the various functions discussed above. For example, suitable logic devices include a central processing unit with associated input/output devices (such as A/D circuits), a microcontroller, a digital signal processor, a field programmable gate array or the like.

An alternative embodiment of the present invention is a method of replacing the brake pad assemblies 30 of the braking system 18. In general, the method includes opening the protective member 114 covering the opening 112 in the housing 24 to release the brake pad assemblies 30. The method further includes removing the brake pad assemblies 30 from the housing 24 through the opening 112 of the housing 24 and inserting a replacement brake pad assembly 30 into the housing 24 through the opening 112 of the housing 24. Finally, the protective member 114 is closed over the opening 112 of the housing 24 and the engaging member 116 of the protective member 114 engages the vertical slots 76 of the brake pad assemblies 30 to maintain the brake pad assemblies 30 in a mounted position.

In an exemplary embodiment, the method of replacing the brake pad assemblies 30 can include disconnecting the quick disconnect connectors 86 and 92 of the temperature sensor assembly 77 and the pad wear detection assembly 78 embedded in each brake pad assembly 30 prior to removing each brake pad assembly 30 from the housing 24. The method can also include connecting the quick disconnect connectors 86 and 92 of the temperature sensor assembly 77 and the pad wear detection assembly 78 embedded in each brake pad assembly 30 after each replacement brake pad assembly 30 has been inserted into the retainer area 142 of the caliper 126 and held in a semi-mounted position by the magnetic piston insert 150 of the driving assembly 128. In an exemplary embodiment, the quick disconnect connectors 86 and 92 are disposed adjacent to the opening 112 of the housing 24.

Broadly, this writing has disclosed the following preferred elements arrangements and methodology. A tension control assembly including a rotating member, a braking member, at least one brake pad, a means for driving the at least one brake pad against the braking member, and a temperature sensing means. The braking member is attached to the rotating member. The at least one brake pad is positioned adjacent to the braking member. The means for driving the at least one brake pad against the braking member forces frictional contact between the at least one brake pad and the braking member, thus providing torque to the rotating member. The temperature sensing means measures the temperature of the at least one brake pad.

Changes may be made in the steps or the sequence or steps of the methods and the combination and arrangement of parts or elements described herein without departing from the spirit and scope of the present invention. Other features and advantages of the present invention are apparent from the detailed description when read in conjunction with the following claims.

## Claims

1. A braking system, comprising:
a rotating member;
a braking member attached to the rotating member;
at least one brake pad positioned adjacent to the braking member;
means for driving the at least one brake pad against the braking member; and
temperature sensing means for measuring the temperature of the at least one brake pad.

2. The system of claim 1, wherein the braking member is selected from the group consisting of a rotor and a brake drum.

3. The system of claim 1, wherein the temperature sensing means is selected from the group consisting of a thermocouple and a thermistor.

4. A braking system, comprising:
a rotating member;
a braking member attached to the rotating member;
at least one brake pad for frictionally contacting the rotor; and
a pad wear detection assembly positioned in a predetermined manner with respect to the at least one brake pad for determining when to replace the at least one brake pad.

5. The system of claim 4, wherein the pad wear detection assembly comprises a loop circuit providing a signal verifying that the loop is closed and a proper pad wear level is maintained, the loop circuit providing a signal when the loop is opened signifying that the pad wear level is such that the at least one brake pad needs to be replaced.

6. A rotor cooling system for a braking system, comprising
a rotating member;
a rotor attached to the rotating member, the rotor having a fluid input port and a fluid output port; and
a first flow tube spatially disposed relative to the rotor for directing fluid into the fluid input port of the rotor so as to allow fluid to be propelled across the rotor and expelled from the rotor out the fluid output port, the first flow tube positioned to isolate the fluid expelled from the fluid output port of the rotor from fluid entering the fluid input port of the rotor.

7. The cooling system of claim 6 further comprising a fluid propulsion system positioned adjacent to the first flow tube on the side opposite the braking member to increase the amount of fluid propelled into the first flow tube.

8. The cooling system of claim 7 further comprising a second flow tube positioned adjacent to the fluid propulsion assembly on the side opposite the first flow tube to increase the amount of fluid that can be drawn into the fluid propulsion assembly.

9. The cooling system of claim 7 wherein the fluid propulsion assembly is selected from the group consisting of a fan and a pump.

10. A braking system permitting brake pad replacement, comprising:
a rotating member;
a rotor attached to the rotating member;
at least one brake pad capable of frictionally contacting the rotor;
a housing substantially covering the rotor and the at least one brake pad of the braking system, the housing provided with at least one opening disposed near the at least one brake pad so as to allow the at least one brake pad to be withdrawn through the at least one opening of the housing; and
at least one protective member covering the at least one opening of the housing, the at least one protective member engaging the at least one brake pad to secure the at least one brake pad within the housing.

11. A braking system, comprising:
a rotating member;
a braking member attached to the rotating member;
at least one brake pad positioned adjacent to the braking member;
means for driving the at least one brake pad against the braking member;
means for measuring the temperature of the at least one brake pad;
a fluid propulsion assembly for directing fluid across the braking member; and
a controller activating the fluid propulsion assembly when the temperature of the at least one brake pad exceeds a first predetermined temperature and deactivating the fluid propulsion assembly when the temperature of the at least one brake pad falls below a second predetermined temperature.

12. A method of replacing a brake pad of a braking system, the braking system having a rotating member, a rotor attached to the rotating member, and at least one brake pad frictionally contacting the rotor, comprising the steps of:
opening at least one protective member covering at least one opening in a housing to release the at least one brake pad, the housing substantially covering the rotor and the at least one brake pad of the braking system, the at least one opening disposed near the at least one brake pad so as to allow the at least one brake pad to be withdrawn through the at least one opening of the housing;
removing the at least one brake pad from the housing through the at least one opening of the housing;
inserting a replacement brake pad into the housing through the at least one opening of the housing; and
closing the at least one protective member to cover the at least one opening of the housing and to maintain the replacement brake pad in a mounted position.

13. A rotor, comprising:
a back plate mountable to a rotating member, the back plate having an outer edge, a first side and a second side opposite of the first side, the second side providing a first frictional surface for braking;
a front ring member having an outer edge, an inner edge, a first side, and a second side opposite of the first side, the first side of the front ring member having a second frictional surface for braking; and
a plurality of fins extending between the first side of the back plate and the second side of the front ring member, each of the fins having an outer end, an inner end and a length extending therebetween, front ring member, the fins, and the back plate forming a plurality of flutes, each of the flutes having a fluid input port and a fluid output port, each fin having the inner end positioned adjacent to the fluid input port and tapering along a portion of the length of the fin.

14. The rotor of claim 13 further comprising:
an inner member extending substantially parallel with the front ring member and positioned between the back plate and the front ring member, the inner member having an inner end terminating at an intersection with the inner end of the fins.

15. The rotor of claim 13 wherein the outer end of the fins and the outer edge of the front ring member terminate at substantially the same position as the back plate.
